# EUROPÄISCHE PATENTSCHRIFT

(11) **EP 2 450 215 B1**
(45) Veröffentlichungstag und Bekanntmachung des Hinweises auf die Patenterteilung: **14.10.2015**
(21) Anmeldenummer: 11185366.9
(22) Anmeldetag: 17.10.2011
(51) Int. Cl.: B60K 6/48, B60K 6/547, F16H 3/091, F16H 37/04, B60W 10/08, B60W 20/00, B60W 10/02, F16H 37/08

(54) **Hybridgetriebe**
Hybrid drive
Engrenage hybride

(30) Priorität: 04.11.2010 DE 102010043354
(43) Veröffentlichungstag der Anmeldung: 09.05.2012
(73) Patentinhaber: ZF Friedrichshafen AG, 88038 Friedrichshafen (DE)
(72) Erfinder: Griesmeier, Uwe, 88677 Markdorf (DE)

(56) Entgegenhaltungen:
- DE-A1-102006 027 709
- DE-A1-102008 002 380
- US-A1- 2010 216 584

## Beschreibung

Die Erfindung betrifft ein Hybridgetriebe gemäß dem Oberbegriff des Patentanspruchs 1.

Hybridantriebe mit zwei oder mehr verschiedenen Antriebsquellen können zur Verringerung des Kraftstoffverbrauchs und der Schadstoffemissionen im Fahrzeugverkehr beitragen. Um einen möglichst effektiven Betrieb des Hybridantriebs zu erreichen, werden Antriebsstrategien eingesetzt, die einen Elektroantrieb situationsbedingt flexibel nutzen, beispielsweise zum Anfahren, als alleinige Antriebsquelle im städtischen Kurzstreckenverkehr oder in einem Stop-and-Go-Betrieb, als zusätzliche Antriebsquelle bei erhöhten Leistungsanforderungen in einem Boostbetrieb, als Startergenerator zum schnellen Starten des Verbrennungsmotors sowie als Generator zur Stromerzeugung, oder zur Energierückgewinnung in einem Rekuperationsbetrieb. Der Verbrennungsmotor soll hingegen zumindest überwiegend in verbrauchs-, drehmoment- und drehzahlgünstigen Betriebspunkten bei hohem Wirkungsgrad betrieben werden.

Ziel der Entwicklung sind Hybrid Antriebsstränge, die möglichst kompakt sind, und die bei möglichst geringer Kompliziertheit mit geringem Kosten- und Konstruktionsaufwand in Fahrzeuge implementiert werden können. Grundsätzlich können Hybridantriebe mit allen gängigen Formen von Fahrzeuggetrieben zur Bildung von Antriebsübersetzungen kombiniert werden. Als besonders vorteilhaft hinsichtlich Effizienz, Flexibilität sowie Fahrkomfort haben sich Parallelhybridanordnungen mit im Kraftfluss parallelem Verbrennungsmotor und Elektroantrieb in Verbindung mit einem automatisierten oder automatischen Schaltgetriebe erwiesen.

Die WO 2008/138 387 A1 zeigt ein solches Getriebe in einer Mehrwellen-Vorgelegebauweise mit verbrennungsmotorisch und/oder elektromotorisch angetriebenen Gängen, das zugkraftunterstützte Schaltvorgänge sowie verschiedene der eingangs erwähnten Hybridfunktionen ermöglicht. Die Getriebestruktur umfasst in achsparalleler Anordnung zwei Teilantriebsstränge mit jeweils einer Antriebswelle sowie einen dazwischen angeordneten Abtriebsstrang mit einer Abtriebswelle, wobei in mehreren Radsatzebenen auf den Wellen je Ebene zwei Losräder, denen jeweils eine Gangkupplung zugeordnet ist, und ein Festrad angeordnet sind.

Die Teilantriebsstränge bilden zusammen mit dem Abtriebsstrang jeweils ein Teilgetriebe mit Gangschaltzahnradpaaren, wobei das jeweilige auf der Abtriebswelle angeordnete Zahnrad zum einen mit einem Zahnrad auf der ersten Antriebswelle und zum anderen mit einem Zahnrad auf der zweiten Antriebswelle kämmt, also wahlweise je nach geschalteter Gangkupplung, an einer Übersetzung des ersten Teilgetriebes oder des zweiten Teilgetriebes partizipiert.

Das erste Teilgetriebe ist über eine Reibungskupplung mit einem Verbrennungsmotor verbindbar, und das zweite Teilgetriebe ist mit einer Elektromaschine permanent antriebsverbunden. Ein Wechsel der Kopplung zwischen der ersten Antriebswelle und der zweiten Antriebswelle mit der Abtriebswelle erfolgt durch Schalten von Gangschaltzahnradpaaren. Dabei sind einige der Gänge durch Schalten eines einzelnen Zahnradpaares im Kraftfluss von einer der Antriebswellen auf die Abtriebswelle und andere Gänge durch Hintereinanderschalten zweier oder mehr Zahnradpaare im Wechsel von der einen Antriebswelle über die andere Antriebswelle auf die Abtriebswelle realisierbar. Bestimmte Gänge winden sich somit im Kraftfluss über beide Teilgetriebe.

Weiterhin sind Anordnungen bekannt, bei denen eine Elektromaschine über eine Getriebestufe oder ein Planetengetriebe mit dem Getriebeeingang eines Schaltgetriebes antriebsverbunden ist. Dadurch kann die Elektromaschine als ein so genanntes Elektrodynamisches Anfahrelement (EDA) eingesetzt werden, wodurch eine herkömmliche Anfahrkupplung entfallen kann.

Die DE 199 34 696 A1 zeigt und beschreibt ein solches Antriebssystem, bei dem ein Planetenträger eines Planetengetriebes mit einem Schaltgetriebe, ein Hohlrad mit einem Verbrennungsmotor und ein Sonnenrad mit einem Elektromotor verbunden sind. Durch das EDA kann ein reibungsbehaftetes Anfahrelement eingespart werden. Neben der Funktion als verschleißarmes Anfahrelement ist die Nutzung der Elektromaschine für die üblichen Hybridfunktionen möglich.

Aus der EP 1 221 004 B1 ist ein Schaltgetriebe in Gruppenbauweise bekannt, bei dem eine Vorschaltgruppe als ein Planetengetriebe ausgebildet ist. Ein als Reibungsbremse ausgebildetes Abstützglied des Planetengetriebes übernimmt die Funktion einer Anfahrkupplung. Durch die Integration der Reibungskupplung in das Getriebe können die Fahrzeugherstellungskosten gesenkt werden.

Die bekannten Antriebsanordnungen ermöglichen ein Anfahren nur dann, wenn eine Anfahrkupplung verwendet wird, oder wenn ausreichend elektrische Energie aus einem Energiespeicher zum Anfahren über eine Elektromaschine zur Verfügung steht. Insbesondere stellt ein Kriechbetrieb an einer Steigung mit nicht genügend vollem elektrischem Energiespeicher für einen herkömmlichen Hybridantrieb ein Problem dar. Bekannte EDA-Systeme mit einem entsprechend übersetzten Planentengetriebe können zwar diese Anforderung leichter erfüllen, weitere Verwendungsmöglichkeiten des Planetensatzes für das Hauptgetriebe, insbesondere im Hinblick auf mögliche Antriebsübersetzungen, sind durch die Anordnung des Planentengetriebes am Getriebeeingang bei solchen Systemen jedoch begrenzt. Unter Berücksichtigung des Kostenaufwandes und des Bauraumbedarfs ist die Effizienz eines zusätzlichen Planetengetriebes bei den bekannten Hybridanordnungen mit Schaltgetrieben daher begrenzt.

Vor diesem Hintergrund liegt der Erfindung die Aufgabe zugrunde, ein kompaktes und im Konstruktions- sowie Kostenaufwand vergleichsweise günstiges Hybridgetriebe mit hoher Funktionalität und Leistungsfähigkeit zu schaffen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass zur Realisierung eines effizienten Hybridgetriebes ein Planetengetriebe getriebeeingangsunabhängig in ein Vorgelegegetriebe in Mehrwellenbauweise integriert und im Betrieb wahlweise mit einem Elektromotor oder mit einem Verbrennungsmotor antriebsverbunden werden kann. Insbesondere soll mit Hilfe eines Planetenradsatzes sowohl eine rein elektrische als auch eine verbrennungsmotorische Anfahr- und Kriechfunktion zur Verfügung stehen. Der Planetenradsatz soll auch zur Variation der Vorgelegeübersetzungen und darüber hinaus für die üblichen Hybridfunktionen eines Vollhybridantriebs einsetzbar sein. Damit führt der zusätzliche Aufwand des Planetengetriebes zu einem höheren, multifunktionalen Nutzen.

Demnach geht die Erfindung aus von einem Hybridgetriebe, beispielsweise für ein Kraftfahrzeug, umfassend zwei Getriebeeingangswellen, die achsparallel zueinander angeordnet sind, und eine achsparallel zwischen den beiden Getriebeeingangswellen angeordnete Getriebeausgangswelle, die ein Vorgelegegetriebe bilden, bei dem eine der beiden Getriebeeingangswellen einem Verbrennungsmotor zugeordnet ist und die andere Getriebeeingangswelle der Getriebeeingangswelle einer Elektromaschine zugeordnet ist, und bei dem in mindestens zwei Radsatzebenen Zahnräder zur Bildung von Gängen angeordnet sind, wobei als Losräder ausgebildete Zahnräder über Schaltvorrichtungen drehfest mit den zugehörigen Wellen verbindbar sind. Zur Lösung der gestellten Aufgabe sieht die Erfindung außerdem vor, dass auf der Getriebeausgangswelle mindestens ein Planetengetriebe angeordnet ist, welches als Komponenten ein Hohlrad, ein Sonnenrad und einen Planetenträger mit mehreren Planetenrädern umfasst, das mit den Getriebeeingangswellen koppelbar ist, und das wahlweise verblockbar ist, frei mitlaufend betreibbar ist, oder so schaltbar ist, dass sich in Wirkverbindung mit dem Vorgelegegetriebe jeweils für zwei Komponenten des Planetengetriebes feste Drehzahlverhältnisse ergeben.

Bei dem Hybridgetriebe gemäß der Erfindung ist demnach ein dreiwelliges Vorgelegegetriebe um ein Planetengetriebe ergänzt, welches in das Vorgelegegetriebe integriert ist.

Bei einer vorteilhaften Ausführungsform der Erfindung weist die erste, motorseitige Radsatzebene ein auf der ersten Getriebeeingangswelle drehbar angeordnetes und mit dieser drehfest verbindbares Losrad, ein auf der zweiten Getriebeeingangswelle drehbar angeordnetes und mit dieser drehfest verbindbares Losrad, und ein auf der Getriebeausgangswelle drehbar angeordnetes, als Zwischenrad ausgebildetes Losrad auf, wobei letzteres einerseits mit der Getriebeausgangswelle drehfest verbindbar ist und andererseits mit dem auf der Getriebeausgangswelle drehbar angeordneten Hohlrad des Planetengetriebes drehfest verbunden ist. Die zweite Radsatzebene weist ein auf der ersten Getriebeeingangswelle drehbar angeordnetes und mit dieser drehfest verbindbares Losrad, ein auf der zweiten Getriebeeingangswelle drehbar angeordnetes und mit dieser drehfest verbindbares Losrad, sowie ein auf der Getriebeausgangswelle drehbar angeordnetes, als Zwischenrad ausgebildetes Losrad auf, das einerseits mit der Getriebeausgangswelle und andererseits mit dem auf der Getriebeausgangswelle drehbar angeordneten Sonnenrad des Planetengetriebes drehfest verbindbar ist. Außerdem ist der Planetenträger des Planetengetriebes drehfest mit der Getriebeausgangswelle verbunden.

Sämtliche in den Radsatzebenen angeordnete Zahnräder sind demnach als Losräder ausgebildet, denen jeweils eine Schaltvorrichtung zur Herstellung einer drehfesten Verbindung mit der zugehörigen Welle zugeordnet ist. Durch die Ausbildung aller Zahnräder als Losräder und deren einzelne Schaltbarkeit über jeweils eine eigene Schaltkupplung entsteht eine hohe konzeptionelle Freiheit des Getriebeaufbaus und beim Einsatz der Radsätze sowie des Planetengetriebes zur Realisierung verschiedener Übersetzungen entsprechend einer gewünschten Schaltlogik.

Bei dieser Anordnung kann das Planetengetriebe zum einen im Blockumlauf geschaltet werden oder nicht geschaltet frei mitlaufen, so dass die Gänge des Vorgelegegetriebe einschließlich gegebenenfalls vorgesehener Windungsgänge in herkömmlicher Weise, ohne Einfluss des Planentengetriebes, darstellbar sind. Zum anderen kann das Planetengetriebe durch das Vorgelegegetriebe mit geschalteter Übersetzung vielfältig angetrieben werden bzw. mit diesem zusammenwirken, so dass sich für jeweils zwei Komponenten, beispielsweise das Sonnenrad und das Hohlrad, feste Drehzahlverhältnisse ergeben. Dadurch entsteht eine Vielzahl von nutzbaren Übersetzungen des Gesamtgetriebes. Durch Variieren der Drehzahl der Elektromaschine können sogar eine oder mehrere Übersetzungen stufenlos verstellt werden.

Außerdem kann vorgesehen sein, dass das mit dem Hohlrad des Planetengetriebes verbundene Zwischenrad der ersten Radsatzebene als ein, aus zwei miteinander verbundenen koaxialen Zahnrädern bestehendes, Doppelzahnrad ausgebildet ist, wobei das eine Zahnrad mit dem zugehörigen Losrad der ersten Getriebeeingangswelle und das andere Zahnrad mit dem zugehörigen Losrad der zweiten Getriebeeingangswelle im Eingriff steht. Dies ermöglicht bei gleichem oder annähernd gleichem axialen Abstand zwischen den Getriebeeingangswellen und der Getriebeausgangswelle eine unterschiedlich übersetzte Kopplung des Verbrennungsmotors und der Elektromaschine mit der Getriebeausgangswelle. Dadurch kann mit geringem konstruktivem Aufwand eine funktionelle Übersetzung zwischen den beiden Antriebsaggregaten, beispielsweise für einen Start des Verbrennungsmotors durch die Elektromaschine, eingestellt werden. Außerdem können für die weiteren Radsatzebenen jeweils gleich große oder annähernd gleich große Zahnräder auf der ersten und der zweiten Eingangswelle verwendet werden.

Die erfindungsgemäße Getriebeanordnung kann verbrennungsmotorisch, rein elektrisch und damit als Vollhybrid, und mit kombiniertem Antrieb betrieben werden. Insbesondere ist über das Planetengetriebe auch ein verbrennungsmotorisches Fahren bei sehr geringer Geschwindigkeit bzw. Anfahren möglich. Somit kann - im Gegensatz zu Systemen, die nur rein elektrisch anfahren können - auch ein Kriechbetrieb bei leerem elektrischem Energiespeicher realisiert werden. Im Vergleich zu herkömmlichen Anfahrelementen, wie Reibungskupplungen oder hydrodynamischen Drehmomentwandlern, treten dabei nur geringe Wärmebelastungen auf. Außerdem stehen alle üblichen Hybridfunktionen, beispielsweise ein Boostmodus und ein Rekuperationsmodus zur Verfügung.

Das Getriebe ist grundsätzlich lastschaltfähig, da in der Dreiwellen-Anordnung der Elektroantrieb unabhängig vom verbrennungsmotorischen Getriebeeingang betrieben werden kann bzw. wahlweise angekoppelt werden kann. Insbesondere sind verbrennungsmotorische Schaltvorgänge, d.h. Gangwechsel zwischen zwei Gängen, bei denen der Verbrennungsmotor die Antriebsquelle des Fahrzeuges ist, unter vollständigem Erhalt der Zugkraft durch Drehmomentunterstützung der Elektromaschine möglich, sofern diese während der Schaltung mit dem Getriebeabtrieb im Kraftschluss verbunden ist. Umgekehrt kann die Zugkraft bei einem elektromotorischen Gangwechsel mittels des Verbrennungsmotors aufrechterhalten werden, sofern der Verbrennungsmotor aktuell nicht abgeschaltet ist. Außerdem sind Schaltvorgänge unter vollständigem Erhalt der Zugkraft auch durch Gangwechsel möglich, bei denen einer der stufenlosen Übersetzungsbereiche in einen der Vorgelegegänge wechselt bzw. in einen der Gänge, die sich aus der Beschaltung des Planetengetriebes mit festen Drehzahlkopplungen zweier Komponenten ergeben.

Die Dreiwellen-Anordnung hat weiterhin den Vorteil, dass konstruktive Einschränkungen bei der Konzeption einer Schaltlogik, wie sie bei bekannten Getriebekonzepten aufgrund einer ständigen mechanischen Wirkverbindung zwischen Verbrennungsmotor und Elektroantrieb bestehen, entfallen.

Zwischen dem Verbrennungsmotor und seiner zugeordneten Getriebeeingangswelle ist ein Anfahr- und Trennelement, beispielsweise eine Reibungskupplung angeordnet, über das der Verbrennungsmotor mit der zugeordneten Getriebeeingangswelle kraftschlüssig verbindbar ist, bzw. um den Verbrennungsmotor bei Schaltvorgängen und im reinen Elektromodus vom Antriebsstrang abkoppeln zu können. Die Elektromaschine kann permanent mit der ihr zugeordneten Getriebeeingangswelle antriebsverbunden und wahlweise motorisch oder generatorisch ansteuerbar ausgebildet sein. Da die Elektromaschine grundsätzlich in beide Drehrichtungen angesteuert werden kann, ist durch eine Drehrichtungsumkehr auch ein Verzicht auf einen separaten Rückwärtsgangradsatz möglich.

Die erforderlichen Gangschaltvorrichtungen können als kostengünstige und Bauraum sowie Gewicht sparende Klauenkupplungen ausgebildet sein. Insbesondere kann jedem Losrad eine einseitig betätigte Klauenkupplung zugeordnet sein. Eine weitere Klauenkupplung kann zur Herstellung einer drehfesten Verbindung zwischen dem Sonnenrad und dem Zwischenrad der ausgangsseitigen Radsatzebene angeordnet sein. Die Schaltungen werden im Falle von Klauenkupplungen über eine Drehzahlregulierung des Verbrennungsmotors und/oder der Elektromaschine synchronisiert. Dabei können vergleichsweise kurze Synchronisationszeiten erreicht werden. Eine Verwendung von mechanischen Synchronisiervorrichtungen, d.h. Synchronkupplungen, ist ebenfalls möglich.

Schließlich ist auch eine Erweiterung der Anordnung mit zusätzlichen, durch Stirnräder gebildeten, Radsatzebenen möglich. Es können auch mehrere Planetengetriebe bzw. Radsatzebenen mit Planentensätzen in das Hybridgetriebe integriert sein. Dadurch lässt sich die Gangzahl nahezu beliebig erhöhen und eine hohe Flexibilität bei der Darstellung einer gewünschten Gangstufung und Gesamtspreizung realisieren.

Zur Verdeutlichung der Erfindung ist der Beschreibung eine Zeichnung eines Ausführungsbeispiels beigefügt. In dieser zeigt
- Fig. 1: eine schematische Darstellung eines erfindungsgemäßen Hybridgetriebes,
- Fig. 2: eine Reihe von Kraftflussdarstellungen schaltbarer Übersetzungen des Hybridgetriebes,
- Fig. 2a: eine Übersetzungstabelle zu Fig. 2,
- Fig. 3: eine Reihe von Kraftflussdarstellungen elektromotorisch angetriebener Übersetzungen des Hybridgetriebes, und
- Fig. 3a: eine Übersetzungstabelle zu Fig. 3.

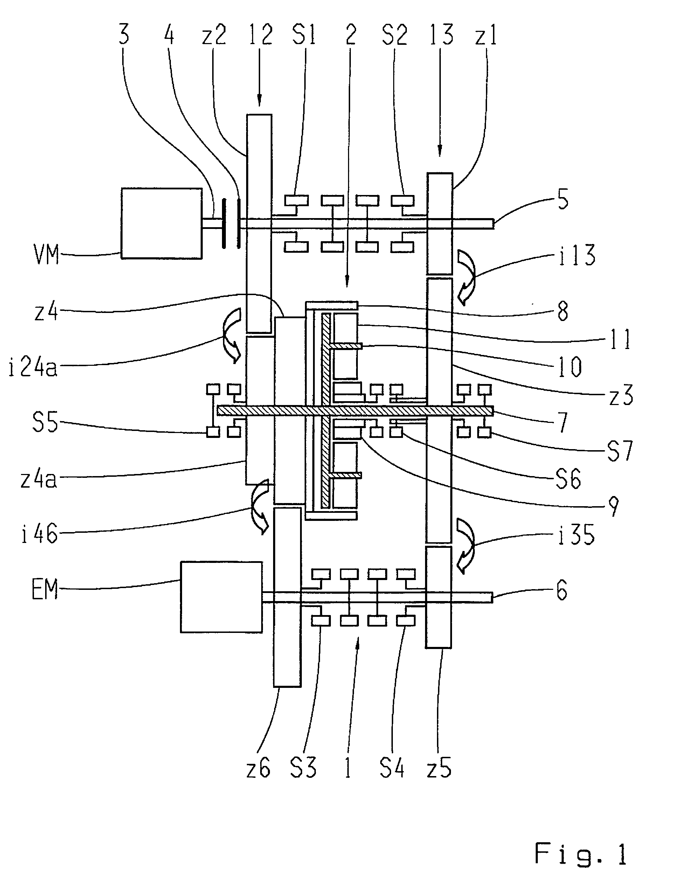

Demnach zeigt Fig. 1 eine aus einem Vorgelegegetriebe 1 und einem Planetengetriebe 2 bestehende Getriebestruktur eines Hybridgetriebes. Das Vorgelegegetriebe 1 weist eine erste Getriebeeingangswelle 5 auf, die über eine Anfahr- und Trennkupplung 4 mit einer Antriebswelle 3 eines Verbrennungsmotors VM verbindbar ist, und eine zweite Getriebeeingangswelle 6, die permanent mit einer Elektromaschine EM verbunden ist, sowie eine als Abtriebs- und Koppelwelle fungierende Getriebeausgangswelle 7.

Auf dem Vorgelegegetriebe 1 sind zwei Radsatzebenen 12 und 13 angeordnet. Die erste, motorseitige Radsatzebene 12 umfasst ein auf der ersten Getriebeeingangswelle 5 drehbar angeordnetes Zahnrad z2, ein auf der zweiten Getriebeeingangswelle 6 drehbar angeordnetes Zahnrad z6 und ein mit diesen Losrädern z2, z6 kämmendes Zwischenrad z4/z4a, welches drehbar auf der Getriebeausgangswelle 7 gelagert ist. Das Zwischenrad z4/z4a besteht aus zwei koaxial zueinander angeordneten und fest miteinander verbundenen Zahnräder z4a, z4 unterschiedlicher Durchmesser. Das erste, kleinere Zahnrad z4a befindet sich im Eingriff mit dem zugehörigen Losrad z2 auf der ersten Getriebeeingangswelle 5. Das zweite, größere Zahnrad z4 befindet sich im Eingriff mit dem zugehörigen Losrad der zweiten Getriebeeingangswelle 6.

Die zweite, getriebeausgangsseitige Radsatzebene 13 umfasst ein auf der ersten Getriebeeingangswelle 5 drehbar angeordnetes Zahnrad z1, ein auf der zweiten Getriebeeingangswelle 6 drehbar angeordnetes Zahnrad z5 und ein mit diesen Losrädern z1, z5 kämmendes Zwischenrad z3, welches drehbar auf der Getriebeausgangswelle 7 gelagert ist.

Das Planetengetriebe 2 weist ein auf der Getriebeausgangswelle 7 drehbar gelagertes Hohlrad 8, welches mit dem Zwischenrad z4/z4a der ersten Radsatzebene 12 verbunden ist, ein Sonnenrad 9, welches mit dem Zwischenrad z3 der zweiten Radsatzebene 13 drehfest verbindbar ist, und einen mit der Getriebeausgangswelle 7 verbundenen Planetenträger 10, welcher einen Satz von Planetenrädern 11 führt, auf. Die Planetenräder 11 kämmen einerseits mit dem zentralen Sonnenrad 9 und andererseits mit dem äußeren Hohlrad 8.

Zur Schaltung von Übersetzungen sind insgesamt sieben als Klauenkupplungen ausgebildete Schaltvorrichtungen S1 bis S7 vorgesehen. Die ersten vier Klauenkupplungen S1, S2, S3, S4 dienen zur jeweiligen Herstellung drehfester Verbindungen der Losräder z1, z2, z5, z6 der beiden Radsatzebenen 12, 13 mit den Getriebeeingangswellen 5, 6. Die fünfte und die siebte Klauenkupplung S5, S7 dienen zur Herstellung drehfester Verbindungen der Zwischenräder z3, z4/z4a mit der Getriebeausgangswelle 7. Durch die sechste Klauenkupplung S6 ist eine drehfeste Verbindung zwischen dem Sonnenrad 9 und dem Zwischenrad z3 der zweiten Radsatzebene 13 herstellbar.

Die Herstellung einer drehfesten Verbindung des Zwischenrades z4/z4a der ersten Radsatzebene 12 mit der Getriebeausgangswelle 7 mittels der zugeordneten Schaltvorrichtung S5 führt zum Verblocken des Planetengetriebes 2, da in diesem Fall einerseits das Hohlrad 8 mit dem Zwischenrad z4/z4a und damit mit der Getriebeausgangswelle 7 drehfest verbunden ist, und andererseits der Planetenträger 10 ebenfalls mit der Getriebeausgangswelle 7 drehfest gekoppelt ist. Das Planetengetriebe 2 befindet sich dann im Blockumlauf ohne Übersetzungsänderung.

Durch Koppeln des Sonnenrades 9 mit dem Zwischenrad z3 der zweiten Radsatzebene 13 mittels der zugeordneten Schaltvorrichtung S6 wird die Übersetzung i0 des Planetengetriebes 2 mit einem bestimmten festen Drehzahlverhältnis, je nach Kraftflusspfad über das Vorgelegegetriebe 1, beispielsweise zwischen Hohlrad 8 und Sonnenrad 9, aktiviert. Wenn weder das Hohlrad 8 noch das Sonnenrad 9 geschaltet sind, läuft das Planetengetriebe 2 frei mit.

Die Losräder z1, z2, z5, z6 bilden mit den Zwischenrädern z3, z4/z4a innerhalb der Radsatzebenen 12, 13 wechselweise Zahnradpaare z1/z3, z5/z3, z2/z4a, z6/z4, denen jeweils eine Übersetzung i zugeordnet ist. Zur Unterscheidung und einfachen Zuordnung sind den Übersetzungen i die Nummerierungen der Zahnräder z1, z2, z3, z4, z4a, z5, z6 angefügt, beispielsweise i24a für die Übersetzung des Zahnradpaares z2/z4a.

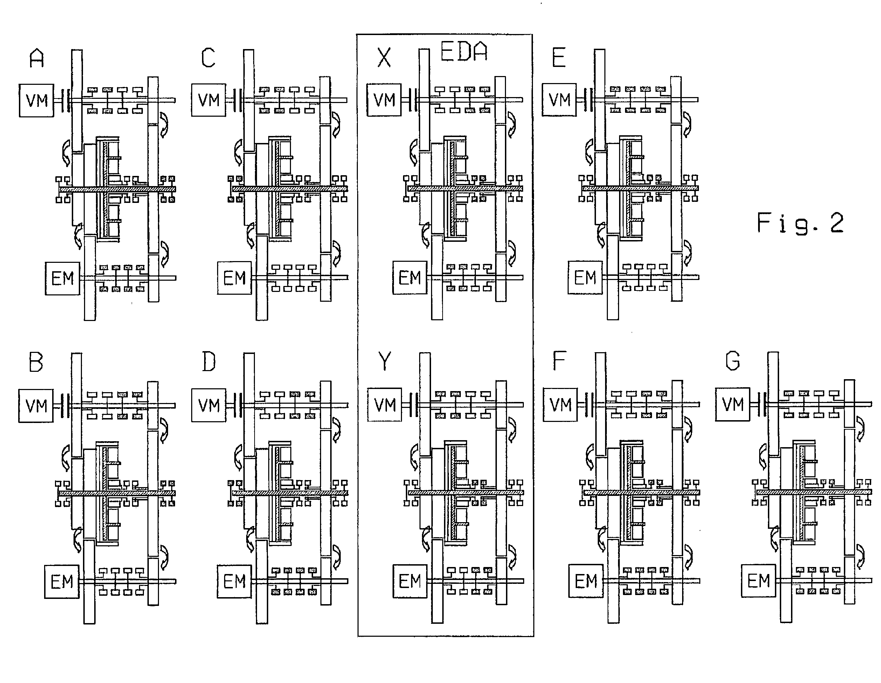

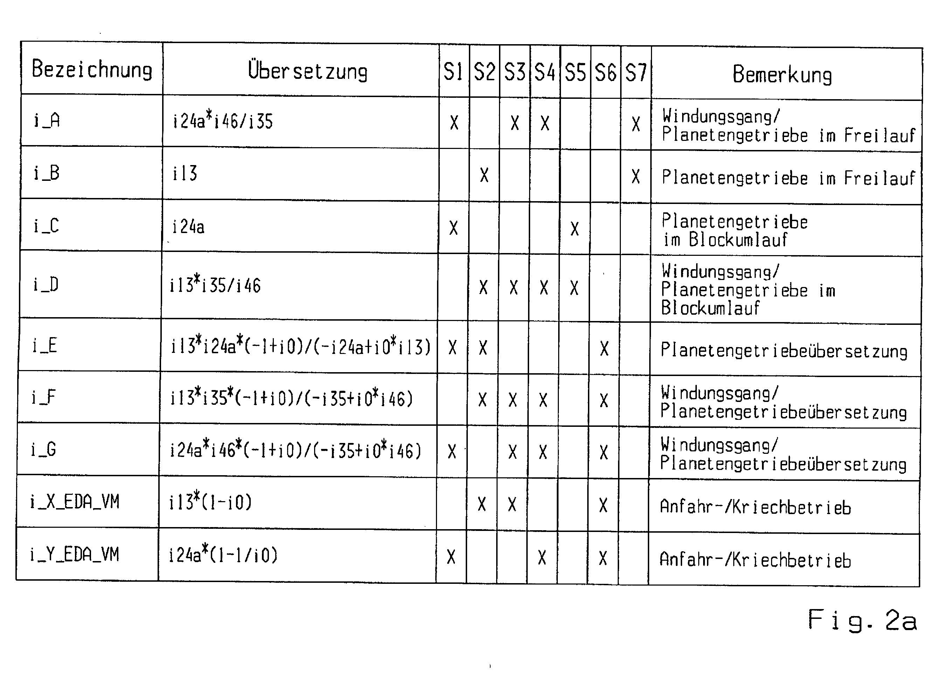

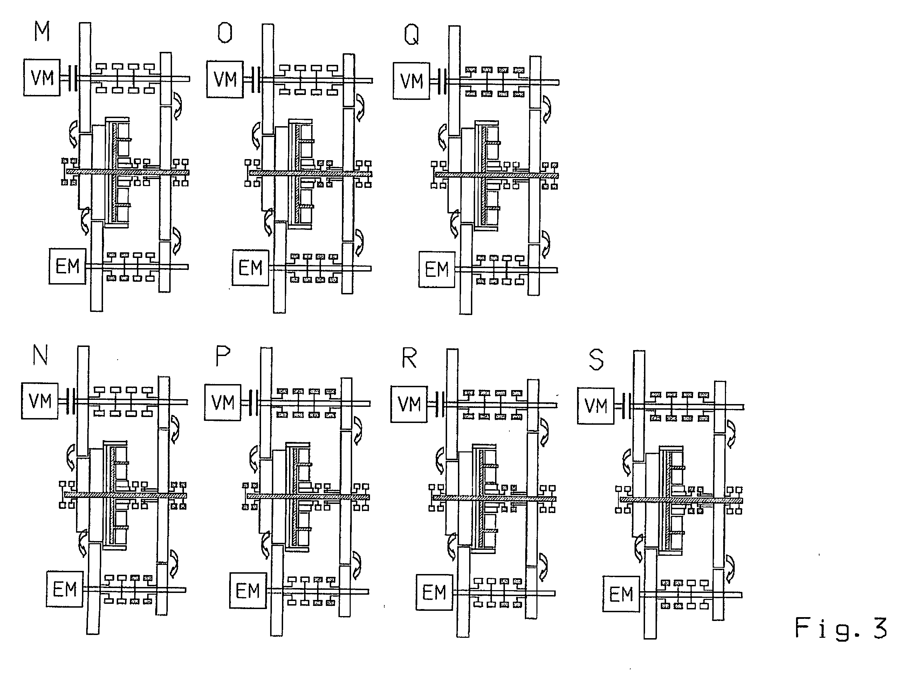

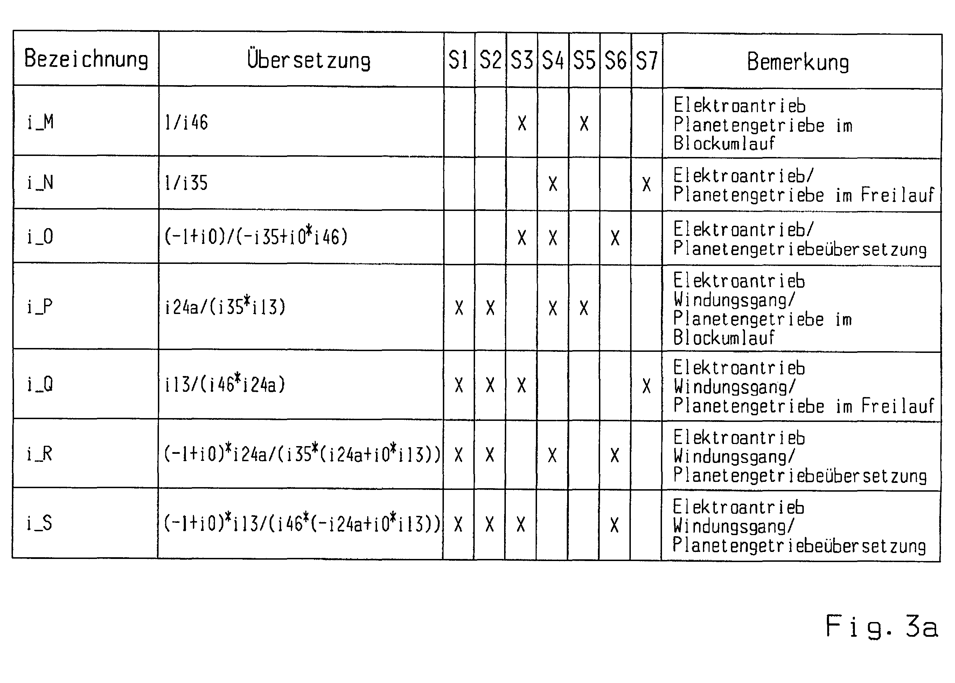

Aus der Kombination der Vorgelegegetriebe-Übersetzungen i13, i35, i24a, i46 und der Planetengetriebeübersetzung i0 ergibt sich eine Vielfalt möglicher Übersetzungen des Hybridgetriebes zwischen Antrieb und Abtrieb. Dies ist in Fig. 2 und Fig. 3 beziehungsweise in den zugehörigen Tabellen in Fig. 2a und Fig. 3a veranschaulicht.

Fig. 2 zeigt sieben Kraftflussdarstellungen A bis G möglicher Übersetzungen für den normalen Fahrbetrieb sowie zwei Kraftflussdarstellungen X, Y für eine Anfahr- bzw. Kriechfunktion als Ersatz eines Elektrodynamischen Anfahrelementes (EDA). Der Kraftfluss ist jeweils anhand der schwarz ausgefüllten aktivierten Klauenkupplungen nachvollziehbar. Aus der zugehörigen Tabelle in Fig. 2a sind die jeweiligen Übersetzungskombinationen und die dafür geschalteten Schaltvorrichtungen S1 bis S7 ersichtlich. Darin zeigt sich, dass sowohl Windungsgänge als auch einfache Gänge, mit und ohne Planetengetriebeübersetzung i0 in einer entsprechenden Schaltlogik berücksichtigt sein können. Für einfache Vorgelegegänge sind zwei Schaltvorrichtungen aktiviert, für den EDA-Betrieb und einfache Gänge mit Planententrieb sind drei Schaltvorrichtungen aktiviert, für Windungsgänge mit oder ohne Planetentrieb sind vier Schaltvorrichtungen aktiviert.

Die Fig. 3 zeigt weitere sieben Kraftflussdarstellungen M bis S möglicher Übersetzungen dargestellt, die über einen Betrieb der Elektromaschine EM nutzbar sind. Aus der zugehörigen Tabelle in Fig. 3a sind die jeweiligen Übersetzungskombinationen und die dafür geschalteten Schaltvorrichtungen S1 bis S7 ersichtlich. Auch bei diesen Übersetzungen sind für einfache Vorgelegegänge jeweils zwei Schaltvorrichtungen aktiviert, für einfache Gänge mit Planententrieb sind drei Schaltvorrichtungen aktiviert, und für Windungsgänge sind vier Schaltvorrichtungen aktiviert.

### Bezugszeichenliste

- 1: Vorgelegegetriebe
- 2: Planetengetriebe
- 3: Antriebswelle
- 4: Anfahr- und Trennelement
- 5: Getriebeeingangswelle
- 6: Getriebeeingangswelle
- 7: Getriebeausgangswelle
- 8: Hohlrad
- 9: Sonnenrad
- 10: Planetenträger
- 11: Planetenrad
- 12: Radsatzebene
- 13: Radsatzebene
- EM: Elektromaschine
- S1 - S7: Schaltvorrichtungen
- VM: Verbrennungsmotor
- i: Übersetzung
- z1 - z6: Zahnräder

## Patentansprüche

1. Hybridgetriebe, beispielsweise für ein Kraftfahrzeug, umfassend zwei Getriebeeingangswellen (5, 6), die achsparallel zueinander angeordnet sind, und eine achsparallel zwischen den beiden Getriebeeingangswellen (5, 6) angeordnete Getriebeausgangswelle (7), die ein Vorgelegegetriebe (1) bilden, bei dem eine der beiden Getriebeeingangswellen (5) einem Verbrennungsmotor (VM) zugeordnet ist und die andere Getriebeeingangswelle (6) einer Elektromaschine (EM) zugeordnet ist, und bei dem in mindestens zwei Radsatzebenen (12, 13) Zahnräder (z1, z2, z3, z4, z4a, z5, z6) zur Bildung von Gängen angeordnet sind, wobei als Losräder ausgebildete Zahnräder (z1, z2, z3, z4, z4a, z5, z6) über Schaltvorrichtungen (S1, S2, S3, S4, S5, S7) drehfest mit den zugehörigen Wellen (5, 6, 7) verbindbar sind, **dadurch gekennzeichnet, dass** auf der Getriebeausgangswelle (7) mindestens ein Planetengetriebe (2) angeordnet ist, welches als Komponenten ein Hohlrad (8), ein Sonnenrad (9) und einen Planetenträger (10) mit mehreren Planetenrädern (11) umfasst, das mit den Getriebeeingangswellen (5, 6) koppelbar ist, und das wahlweise verblockbar ist, frei mitlaufend betreibbar ist, oder so schaltbar ist, dass sich in Wirkverbindung mit dem Vorgelegegetriebe (1) jeweils für zwei Komponenten (8, 9, 10) des Planetengetriebes (2) feste Drehzahlverhältnisse ergeben.

2. Hybridgetriebe nach Anspruch 1, **dadurch gekennzeichnet, dass** die erste, motorseitige Radsatzebene (12) ein auf der ersten Getriebeeingangswelle (5) drehbar angeordnetes und mit dieser drehfest verbindbares Losrad (z2), ein auf der zweiten Getriebeeingangswelle (6) drehbar angeordnetes und mit dieser drehfest verbindbares Losrad (z6) und ein auf der Getriebeausgangswelle (7) drehbar angeordnetes, als Zwischenrad ausgebildetes Losrad (z4/z4a) aufweist, das einerseits mit der Getriebeausgangswelle (7) drehfest verbindbar ist und andererseits mit dem auf der Getriebeausgangswelle (7) drehbar angeordneten Hohlrad (8) des Planetengetriebes (2) drehfest verbunden ist, und dass die zweite Radsatzebene (13) ein auf der ersten Getriebeeingangswelle (5) drehbar angeordnetes und mit dieser drehfest verbindbares Losrad (z1), ein auf der zweiten Getriebeeingangswelle (6) drehbar angeordnetes und mit dieser drehfest verbindbares Losrad (z5), und ein auf der Getriebeausgangswelle (7) drehbar angeordnetes, als Zwischenrad ausgebildetes Losrad (z3) aufweist, das einerseits mit der Getriebeausgangswelle (7) und andererseits mit dem auf der Getriebeausgangswelle (7) drehbar angeordneten Sonnenrad (9) des Planetengetriebes (2) drehfest verbindbar ist, und dass der Planetenträger (10) des Planetengetriebes (2) drehfest mit der Getriebeausgangswelle (7) verbunden ist.

3. Hybridgetriebe nach Anspruch 1 oder 2, **dadurch gekennzeichnet, dass** das sämtliche in den Radsatzebenen (12, 13) angeordnete Zahnräder (z1, z2, z3, z4, z4a, z5, z6) als Losräder ausgebildet sind, denen jeweils eine Schaltvorrichtung (S1, S2, S3, S4, S5, S7) zur Herstellung einer drehfesten Verbindung mit der zugehörigen Welle (5, 6, 7) zugeordnet ist.

4. Hybridgetriebe nach einem der Ansprüche 1 bis 3, **dadurch gekennzeichnet, dass** das mit dem Hohlrad (8) des Planetengetriebes (2) verbundene Zwischenrad (z4/z4a) der ersten Radsatzebene (12) als ein aus zwei miteinander verbundenen koaxialen Zahnrädern (z4, z4a) bestehendes Doppelzahnrad ausgebildet ist, wobei das eine Zahnrad (z4a) mit dem zugehörigen Losrad (z2) der ersten Getriebeeingangswelle (z5) und das andere Zahnrad (z4) mit dem zugehörigen Losrad (z6) der zweiten Getriebeeingangswelle (6) im Eingriff steht.

5. Hybridgetriebe nach einem der Ansprüche 1 bis 4, **dadurch gekennzeichnet, dass** mittels der Elektromaschine (EM) wenigstens eine der Funktionen Starten des Verbrennungsmotors (VM), Laden eines Energiespeichers und/oder Versorgen von Verbrauchern eines Bordnetzes, Boosten zur Unterstützung einer Antriebsleistung, Rekuperieren zur Rückgewinnung von Bremsenergie darstellbar ist, und dass die Elektromaschine (EM) und/oder der Verbrennungsmotor (VM) als Zugkraftunterstützungsmittel bei Schaltvorgängen ansteuerbar sind.

6. Hybridgetriebe nach einem der Ansprüche 1 bis 5, **dadurch gekennzeichnet, dass** mit diesem wahlweise ein elektromotorischer oder ein verbrennungsmotorischer Anfahr- und Kriechbetrieb möglich ist.

7. Hybridgetriebe nach einem der Ansprüche 1 bis 6, **dadurch gekennzeichnet, dass** zwischen dem Verbrennungsmotor (VM) und seiner zugeordneten Getriebeeingangswelle (5) ein Anfahr- und Trennelement (4) angeordnet ist, über das der Verbrennungsmotor (VM) mit der Getriebeeingangswelle (5) kraftschlüssig verbindbar ist, und dass die Elektromaschine (EM) permanent mit der ihr zugeordneten Getriebeeingangswelle (6) antriebsverbunden ist.

8. Hybridgetriebe nach einem der Ansprüche 1 bis 7, **dadurch gekennzeichnet, dass** die Schaltvorrichtrungen (S1, S2, S3, S4, S5, S6, S7) als Klauenkupplungen ausgebildet sind, und dass die Elektromaschine (EM) und/oder der Verbrennungsmotor (VM) als Synchronisierungsmittel ansteuerbar sind.

9. Hybridgetriebe nach einem der Ansprüche 1 bis 8, **dadurch gekennzeichnet, dass** das mindestens eine weitere, aus Stirnrädern bestehende Radsatzebene angeordnet ist.

10. Hybridgetriebe nach einem der Ansprüche 1 bis 9, **dadurch gekennzeichnet, dass** das mindestens ein weitere, aus Stirnrädern und einem zugeordneten weiteren Planetengetriebe bestehende Radsatzebene angeordnet ist.

## Claims

1. Hybrid transmission, for example for a motor vehicle, comprising two transmission input shafts (5, 6) which are arranged axially parallel to one another, and a transmission output shaft (7) which is arranged axially parallel between the two transmission input shafts (5, 6), which shafts form a countershaft transmission (1), in which one of the two transmission input shafts (5) is assigned to an internal combustion engine (VM) and the other transmission input shaft (6) is assigned to an electric machine (EM), and in which gearwheels (z1, z2, z3, z4, z4a, z5, z6) are arranged in at least two gear set planes (12, 13) in order to form gears, it being possible for gearwheels (z1, z2, z3, z4, z4a, z5, z6) which are configured as movable gears to be connected fixedly to the associated shafts (5, 6, 7) so as to rotate with them via shifting apparatuses (S1, S2, S3, S4, S5, S7), **characterized in that** at least one planetary gear mechanism (2) is arranged on the transmission output shaft (7), which planetary gear mechanism (2) comprises, as components, an internal gear (8), a sun gear (9) and a planetary carrier (10) with a plurality of planetary gears (11), can be coupled to the transmission input shafts (5, 6), and can optionally be blocked, can be operated so as to corotate freely, or can be shifted in such a way that, in operative connection with the countershaft transmission (1), fixed rotational speed ratios result in each case for two components (8, 9, 10) of the planetary gear mechanism (2).

2. Hybrid transmission according to Claim 1, **characterized in that** the first, motor-side gear set plane (12) has a movable gear (z2) which is arranged rotatably on the first transmission input shaft (5) and can be connected fixedly to the latter so as to rotate with it, a movable gear (z6) which is arranged rotatably on the second transmission input shaft (6) and can be connected fixedly to the latter so as to rotate with it, and a movable gear (z4/z4a) which is arranged rotatably on the transmission output shaft (7), is configured as an intermediate gear, can firstly be connected fixedly to the transmission output shaft (7) so as to rotate with it, and secondly is connected fixedly to the internal gear (8), arranged rotatably on the transmission output shaft (7), of the planetary gear mechanism (2) so as to rotate with it, and **in that** the second gear set plane (13) has a movable gear (z1) which is arranged rotatably on the first transmission input shaft (5) and can be connected fixedly to the latter so as to rotate with it, a movable gear (z5) which is arranged rotatably on the second transmission input shaft (6) and can be connected fixedly to the latter so as to rotate with it, and a movable gear (z3) which is arranged rotatably on the transmission output shaft (7), is configured as an intermediate gear, can be connected fixedly firstly to the transmission output shaft (7) and secondly to the sun gear (9), arranged rotatably on the transmission output shaft (7), of the planetary gear mechanism (2) so as to rotate with them, and **in that** the planetary carrier (10) of the planetary gear mechanism (2) is connected fixedly to the transmission output shaft (7) so as to rotate with it.

3. Hybrid transmission according to Claim 1 or 2, **characterized in that** all the gearwheels (z1, z2, z3, z4, z4a, z5, z6) which are arranged in the gear set planes (12, 13) are configured as movable gears which are assigned in each case one shifting apparatus (S1, S2, S3, S4, S5, S7) for producing a fixed connection to the associated shaft (5, 6, 7) so as to rotate with it.

4. Hybrid transmission according to one of Claims 1 to 3, **characterized in that** the intermediate gear (z4/z4a), connected to the internal gear (8) of the planetary gear mechanism (2), of the first gear set plane (12) is configured as a double gearwheel which consists of two coaxial gearwheels (z4, z4a) which are connected to one another, the one gearwheel (z4a) being in engagement with the associated movable gear (z2) of the first transmission input shaft (z5) and the other gearwheel (z4) being in engagement with the associated movable gear (z6) of the second transmission input shaft (6).

5. Hybrid transmission according to one of Claims 1 to 4, **characterized in that** at least one of the functions of starting of the internal combustion engine (VM), charging of an energy store and/or supplying of consumers of a vehicle-mounted electrical system, boosting for assisting propulsive power, recuperating for recovering braking energy can be provided by means of the electric machine (EM), and **in that** the electric machine (EM) and/or the internal combustion engine (VM) can be actuated as tractive power assisting means during shifting operations.

6. Hybrid transmission according to one of Claims 1 to 5, **characterized in that** starting and crawling operation by electric motor or internal combustion engine is possible selectively by way of the said hybrid transmission.

7. Hybrid transmission according to one of Claims 1 to 6, **characterized in that** a starting and disconnecting element (4) is arranged between the internal combustion engine (VM) and its associated transmission input shaft (5), via which starting and disconnecting element (4) the internal combustion engine (VM) can be connected non-positively to the transmission input shaft (5), and **in that** the electric machine (EM) is drive-connected permanently to the transmission input shaft (6) which is assigned to it.

8. Hybrid transmission according to one of Claims 1 to 7, **characterized in that** the shifting apparatuses (Sl, S2, S3, S4, S5, S6, S7) are configured as claw couplings, and **in that** the electric machine (EM) and/or the internal combustion engine (VM) can be actuated as synchronizing means.

9. Hybrid transmission according to one of Claims 1 to 8, **characterized in that** the at least one further gear set plane which consists of spur gears is arranged.

10. Hybrid transmission according to one of Claims 1 to 9, **characterized in that** the at least one further gear set plane which consists of spur gears and an associated further planetary gear mechanism is arranged.

## Revendications

1. Transmission hybride, par exemple pour un véhicule automobile, comprenant deux arbres d'entrée de transmission (5, 6) qui sont disposés avec leurs axes parallèles l'un à l'autre, et un arbre de sortie de transmission (7) disposé avec son axe parallèle entre les deux arbres d'entrée de transmission (5, 6), lesquels forment une transmission de renvoi (1), dans laquelle l'un des deux arbres d'entrée de transmission (5) est associé à un moteur à combustion interne (VM) et l'autre arbre d'entrée de transmission (6) est associé à une machine électrique (EM), et dans laquelle, dans au moins deux plans de jeux de pignons (12, 13), sont disposés des pignons dentés (z1, z2, z3, z4, z4a, z5, z6) pour former des rapports, des pignons dentés (z1, z2, z3, z4, z4a, z5, z6) réalisés sous forme de pignons fous pouvant être connectés par le biais de dispositifs de commutation (S1, S2, S3, S4, S5, S7) de manière solidaire en rotation aux arbres associés (5, 6, 7), **caractérisée en ce qu'**au moins un engrenage planétaire (2) est disposé sur l'arbre de sortie de transmission (7), lequel comprend, en tant que composants, une couronne dentée (8), une roue solaire (9) et un porte-satellites (10) avec plusieurs satellites (11), lequel peut être accouplé aux arbres d'entrée de transmission (5, 6) et peut être bloqué de manière sélective, peut être entraîné en roue libre ou peut être commuté de telle sorte que l'on obtienne des rapports de vitesse de rotation fixes en liaison fonctionnelle avec la transmission de renvoi (1) à chaque fois pour deux composants (8, 9, 10) de l'engrenage planétaire (2).

2. Transmission hybride selon la revendication 1, **caractérisée en ce que** le premier plan de jeux de pignons du côté du moteur (12) présente un pignon fou (z2) disposé de manière rotative sur le premier arbre d'entrée de transmission (5) et pouvant être connecté de manière solidaire en rotation à celui-ci, un pignon fou (z6) disposé de manière rotative sur le deuxième arbre d'entrée de transmission (6) et pouvant être connecté de manière solidaire en rotation à celui-ci et un pignon fou (z4/z4a) disposé de manière rotative sur l'arbre de sortie de transmission (7), réalisé sous forme de pignon intermédiaire, qui peut être connecté de manière solidaire en rotation d'une part à l'arbre de sortie de transmission (7) et qui est connecté d'autre part de manière solidaire en rotation à la couronne dentée (8) de l'engrenage planétaire (2) disposée de manière rotative sur l'arbre de sortie de transmission (7), et **en ce que** le deuxième plan de jeux de pignons (13) présente un pignon fou (z1) disposé de manière rotative sur le premier arbre d'entrée de transmission (5) et pouvant être connecté de manière solidaire en rotation à celui-ci, un pignon fou (z5) disposé de manière rotative sur le deuxième arbre d'entrée de transmission (6) et pouvant être connecté de manière solidaire en rotation à celui-ci et un pignon fou (z3) disposé de manière rotative sur l'arbre de sortie de transmission (7), réalisé sous forme de pignon intermédiaire, qui peut être connecté de manière solidaire en rotation d'une part à l'arbre de sortie de transmission (7) et d'autre part à la roue solaire (9) de l'engrenage planétaire (2) disposée de manière rotative sur l'arbre de sortie de transmission (7), et **en ce que** le porte-satellites (10) de l'engrenage planétaire (2) est connecté de manière solidaire en rotation à l'arbre de sortie de transmission (7).

3. Transmission hybride selon la revendication 1 ou 2, **caractérisée en ce que** tous les pignons dentés (z1, z2, z3, z4, z4a, z5, z6) disposés dans les plans de jeux de pignons (12, 13) sont réalisés sous forme de pignons fous auxquels est à chaque fois associé un dispositif de commutation (S1, S2, S3, S4, S5, S7) afin d'établir une connexion solidaire en rotation à l'arbre associé (5, 6, 7).

4. Transmission hybride selon l'une quelconque des revendications 1 à 3, **caractérisée en ce que** le pignon intermédiaire (z4/z4a) connecté à la couronne dentée (8) de l'engrenage planétaire (2) du premier plan de jeux de pignons (12) est réalisé sous forme de double pignon denté constitué de deux pignons dentés coaxiaux connectés l'un à l'autre (z4/z4a), l'un des pignons dentés (z4a) étant en prise avec le pignon fou associé (z2) du premier arbre d'entrée de transmission (z5) et l'autre pignon denté (z4) étant en prise avec le pignon fou associé (z6) du deuxième arbre d'entrée de transmission (6).

5. Transmission hybride selon l'une quelconque des revendications 1 à 4, **caractérisée en ce qu'**au moins l'une des fonctions de démarrage du moteur à combustion interne (VM), de charge d'un accumulateur d'énergie et/ou d'alimentation de consommateurs d'un réseau de bord, de suralimentation pour l'assistance d'une puissance d'entraînement, de récupération pour la récupération de l'énergie de freinage peut être assurée par la machine électrique (EM), et **en ce que** la machine électrique (EM) et/ou le moteur à combustion interne (VM) peuvent être commandés en tant que moyen d'assistance à la force de traction en cas d'opérations de commutation.

6. Transmission hybride selon l'une quelconque des revendications 1 à 5, **caractérisée en ce qu'**un fonctionnement de démarrage et de roulage au pas est possible avec celle-ci de manière sélective par moteur électrique ou par moteur à combustion interne.

7. Transmission hybride selon l'une quelconque des revendications 1 à 6, **caractérisée en ce qu'**entre le moteur à combustion interne (VM) et son arbre d'entrée de transmission associé (5) est disposé un élément de démarrage et de séparation (4) par le biais duquel le moteur à combustion interne (VM) peut être connecté par engagement par force à l'arbre d'entrée de transmission (5) et **en ce que** la machine électrique (EM) est connectée par entraînement de manière permanente à l'arbre d'entrée de transmission (6) qui lui est associé.

8. Transmission hybride selon l'une quelconque des revendications 1 à 7, **caractérisée en ce que** les dispositifs de commutation (S1, S2, S3, S4, S5, S6, S7) sont réalisés sous forme d'embrayages à griffes et **en ce que** la machine électrique (EM) et/ou le moteur à combustion interne (VM) peuvent être commandés en tant que moyen de synchronisation.

9. Transmission hybride selon l'une quelconque des revendications 1 à 8, **caractérisée en ce qu'**il est prévu au moins un plan de jeux de pignons supplémentaire constitué de pignons droits.

10. Transmission hybride selon l'une quelconque des revendications 1 à 9, **caractérisée en ce qu'**il est prévu au moins un plan de jeux de pignons supplémentaire constitué de pignons droits et d'un engrenage planétaire supplémentaire associé.
